(19) **Europäisches Patentamt**
**European Patent Office**
**Office européen des brevets**

(11) **EP 2 439 291 B1**

(12) # EUROPÄISCHE PATENTSCHRIFT

(45) Veröffentlichungstag und Bekanntmachung des Hinweises auf die Patenterteilung:
**27.11.2013 Patentblatt 2013/48**

(21) Anmeldenummer: **10186555.8**

(22) Anmeldetag: **05.10.2010**

(51) Int Cl.:
*C21D 6/00* (2006.01)     *C21D 8/02* (2006.01)
*C21D 9/46* (2006.01)     *C22C 38/04* (2006.01)
*C22C 38/12* (2006.01)     *C22C 38/14* (2006.01)
*C22C 38/02* (2006.01)

(54) **Mehrphasenstahl, aus einem solchen Mehrphasenstahl hergestelltes kaltgewalztes Flachprodukt und Verfahren zu dessen Herstellung**

Multiphase steel, cold rolled flat product produced from this multiphase steel and method for producing same

Acier à plusieurs phases, produit plat laminé à froid fabriqué à partir d'un tel acier à plusieurs phases et son procédé de fabrication

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**11.04.2012 Patentblatt 2012/15**

(73) Patentinhaber:
• **ThyssenKrupp Steel Europe AG**
**47166 Duisburg (DE)**
• **Voestalpine Stahl GmbH**
**4020 Linz (AT)**

(72) Erfinder:
• **Bocharova, Ekaterina, Dr.**
**47057, Duisburg (DE)**
• **Mattissen, Dorothea, Dr.**
**45478, Mülheim (DE)**
• **Sebald, Roland, Dr.**
**47608, Geldern (DE)**
• **Krizan, Daniel, Dr.**
**4030, Linz (AT)**
• **Pichler, Andreas, Dr.**
**4840, Vöcklabruck (AT)**

(74) Vertreter: **Cohausz & Florack**
**Patent- und Rechtsanwälte**
**Partnerschaftsgesellschaft**
**Bleichstraße 14**
**40211 Düsseldorf (DE)**

(56) Entgegenhaltungen:
**EP-A1- 1 865 085     WO-A1-2009/096344**
**WO-A1-2009/099251     JP-A- 1 272 720**

**US-A1- 2008 251 161     US-A1- 2010 108 200**
**US-A1- 2010 172 786**

• **SUGIMOTO K I ET AL: "Formability of Nb bearing ultra high-strength TRIP-aided sheet steels", JOURNAL OF MATERIALS PROCESSING TECHNOLOGY, ELSEVIER, NL, Bd. 177, Nr. 1-3, 3. Juli 2006 (2006-07-03), Seiten 390-395, XP025080827, ISSN: 0924-0136, DOI: DOI: 10.1016/J.JMATPROTEC.2006.03.186 [gefunden am 2006-07-03]**
• **BLECK W ET AL: "Niobium in dual phase and TRIP steels", NIOBIUM SCIENCE & TECHNOLOGY, PROCEEDINGS OF THE INTERNATIONAL SYMPOSIUM NIOBIUM 2001,, 1. Januar 2001 (2001-01-01), Seiten 727-752, XP009119372,**
• **YU CHEN ET AL: "Microstructures and mechanical properties of Nb-Ti bearing hot-rolled TRIP steels", JOURNAL OF MATERIALS SCIENCE & TECHNOLOGY, ZHONGGUO KEXUEYUAN, CN, Bd. 22, Nr. 6, 1. Januar 2006 (2006-01-01) , Seiten 759-762, XP009133609, ISSN: 1005-0302**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 439 291 B1

- TRAINT S ET AL: "The influence of Nb on the phase transformations and mechanical properties in Al- and Si-alloyed TRIP-steels", A SYMPOSIUM ON THE THERMODYNAMICS, KINETICS, CHARACTERIZATION AND MODELING OF AUSTENITE FORMATION AND DECOMPOSITION : [HELD AT THE MATERIALS SCIENCE & TECHNOLOGY 2003 MEETING IN CHICAGO, ILLINOIS, USA, NOVEMBER 9 - 12, 2003], TMS, WARRENDALE, US, 1. Januar 2003 (2003-01-01), Seiten 577-594, XP009145169, ISBN: 978-0-87339-559-5

**Beschreibung**

Die Erfindung betrifft ein Verfahren zur Herstellung eines Kaltflachprodukts, einen Mehrphasenstahl sowie ein aus einem solchen Mehrphasenstahl durch Kaltwalzen erzeugtes Kaltwalzflachprodukt. Bei den erfindungsgemäßen "Flachprodukten" kann es sich um Bleche, Bänder, daraus gewonnene Zuschnitte oder vergleichbare Produkte handeln. Wenn hier von "Kaltflachprodukten" die Rede ist, dann sind damit durch Kaltwalzen erzeugte Flachprodukte gemeint.

Insbesondere im Bereich des Fahrzeugkarosseriebaus besteht die Forderung nach Werkstoffen, die einerseits hohe Festigkeiten besitzen, andererseits aber auch so gut verformbar sind, dass aus ihnen mit einfachen Mitteln komplex gestaltete Bauteile geformt werden können.

Ein Mehrphasenstahl, der ein in dieser Hinsicht ausgewogenes Eigenschaftsprofil besitzen soll, ist aus der EP 1 367 143 A1 bekannt. Neben einer vergleichbar hohen Festigkeit und guten Verformbarkeit soll der bekannte Stahl auch eine besonders gute Schweißeignung besitzen.

Der bekannte Stahl enthält dazu 0,03 - 0,25 Gew.-% C, durch dessen Anwesenheit in Kombination mit den anderen Legierungselementen Zugfestigkeiten von mindestens 700 MPa erreicht werden sollen. Zusätzlich unterstützt werden soll die Festigkeit des bekannten Stahls durch Mn in Gehalten von 1,4 - 3,5 Gew.-%. A1 wird bei der Erschmelzung des bekannten Stahls als Oxidationsmittel eingesetzt und kann in dem Stahl in Gehalten von bis zu 0,1 Gew.-% vorhanden sein. Der bekannte Stahl kann auch bis zu 0,7 Gew.-% Si aufweisen, durch dessen Anwesenheit sich die ferritisch-martensitische Struktur des Stahls stabilisieren lässt. Cr wird dem bekannten Stahl in Gehalten von 0,05 - 1 Gew.-% zugegeben, um den Einfluss der durch den Schweißvorgang im Bereich der Schweißnaht eingetragenen Wärme zu vermindern. Für denselben Zweck sind in dem bekannten Stahl 0,005 - 0,1 Gew.-% Nb vorhanden. Nb soll dabei zusätzlich einen positiven Einfluss auf die Verformbarkeit des Stahls besitzen, da seine Anwesenheit eine Feinung des Ferritkorns mit sich bringt. Für denselben Zweck können dem bekannten Stahl 0,05 - 1 Gew.-% Mo, 0,02 - 0,5 Gew.-% V, 0,005 - 0,05 Gew.-% Ti und 0,0002 - 0,002 Gew.-% B zugegeben werden. Mo und V tragen dabei zur Härtbarkeit des bekannten Stahls bei, während Ti und B sich zusätzlich positiv auf die Festigkeit des Stahls auswirken sollen.

Ein anderes, ebenfalls aus einem hochfesten Mehrphasenstahl bestehendes, gut verformbares Stahlblech ist aus der EP 1 589 126 B1 bekannt. Dieses bekannte Stahlblech enthält 0,10 - 0,28 Gew.-% C, 1,0 - 2,0 Gew.-% Si, 1,0 - 3,0 Gew.-% Mn, 0,03 - 0,10 Gew.-% Nb, bis zu 0,5 Gew.-% A1, bis zu 0,15 Gew.-% P, bis zu 0,02 Gew.-%  S. Optional können in dem Stahlblech bis zu 1,0 Gew.-% Mo, bis zu 0,5 Gew.-% Ni, bis zu 0,5 Gew.-% Cu, bis 0,003 Gew.-% Ca, bis zu 0,003 Gew.-% Seltenerdmetalle, bis zu 0,1 Gew.-% Ti oder bis zu 0,1 Gew.-% V vorhanden sein. Das Gefüge des bekannten Stahlblechs weist bezogen auf seine Gesamtstruktur einen Restaustenit-Gehalt von 5 - 20 % sowie mindestens 50 % bainitischen Ferrit auf. Gleichzeitig soll der Anteil an polygonalem Ferrit an dem Gefüge des bekannten Stahlblechs höchstens 30 % betragen. Durch die Beschränkung des Anteils an polygonalem Ferrit soll in dem bekannten Stahlblech Bainit die Matrix-Phase bilden und Restautenit-Anteile vorhanden sein, die zur Ausgewogenheit von Zugfestigkeit und Verformbarkeit beitragen. Auch dabei soll die Anwesenheit von Nb sicherstellen, dass der Restaustenit-Anteil des Gefüges feinkörnig ausgebildet ist. Um diesen Effekt zu gewährleisten, wird im Zuge der Erzeugung des aus der EP 1 589 126 B1 bekannten Stahlblechs eine besonders hohe Anfangstemperatur des Warmwalzens von 1250 - 1350 °C gewählt. In diesem Temperaturbereich geht Nb vollständig in feste Lösung, so dass sich während des Warmwalzens des Stahls eine große Zahl von feinen Nb-Karbiden bildet, die im polygonalen Ferrit oder im Bainit vorliegen.

Weiter heißt es in der EP 1 589 126 B1, dass die hohe Anfangstemperatur des Warmwalzens zwar die Voraussetzung für die Feinheit des Restaustenits ist, jedoch nicht alleine den gewünschten Effekt hat. Vielmehr soll dazu auch eine abschließende Glühung bei Temperaturen oberhalb der $A_{c3}$-Temperatur, ein darauf folgendes kontrolliertes Abkühlen mit einer Abkühlrate von mindestens 10 °C/s bis zu einer im Bereich von 300 - 450 °C liegenden Temperatur, bei der die Bainit-Umwandlung abläuft, und schließlich ein Halten bei dieser Temperatur über eine ausreichend lange Zeit erforderlich sein.

Ein weiteres hochfestes Stahlflachprodukt ist aus der US 2010/0108200 A1 bekannt. Dieses mit einer Schmelztauchbeschichtung versehene Stahlflachprodukt enthält neben Eisen und unvermeidbaren Verunreinigungen (in Masse-%) 0,05 - 0,3 % C, 0,005 - 3,0 % Si, 1,5 - 3,5 % Mn, 0,005 - 0,15 % Al, bis zu 0,1 % P und bis zu 0,005 % S. Das Gefüge des Stahlflachprodukts besteht dabei zu 5 - 85 % aus Ferrit, zu 15 - 90 % aus Martensit und zu bis zu 20 % aus Restaustenit, wobei die Summe der Gehalte an Ferrit, Martensit und Restaustenit im Gefüge mindestens 70 % beträgt.

Aus der JP 01272720 A ist des Weiteren ein Verfahren zum Erzeugen eines hochfesten Stahlflachprodukts bekannt, bei dem ein Stahl, der neben Eisen und unvermeidbaren Verunreinigungen 0,12 - 0,3 % C, 1,5 - 3,0 % Si, 1,1 - 2,4 % Mn, 0,01 - 0,1 % Nb, weniger als 0,005 % S, und 0,01 - 0,06 % Al enthält, zu Brammen vergossen wird, die anschließend bei einer mindestens der $Ar_3$-Temperatur entsprechenden Warmwalzendtemperatur warmgewalzt werden. Das erhaltene Warmband wird bei einer weniger als 600 °C betragenden Haspeltemperatur gehaspelt und anschließend einer im kontinuierlichen Duchlauf absolvierten Glühung unterzogen, bei der das Warmband im Austenit-Ferrit-Gebiet gehalten wird, in dem es über eine Dauer von mindestens 4 Minuten auf eine Temperatur erwärmt wird, die im Bereich von $Ac_1$ + 30 °C bis $Ar_3$ liegt. Anschließend wird das Warmband zunächst mit 5 - 30 °C/s auf 500 - 800  °C und dann mit mindestens 70 °C/s beschleunigt auf 350 - 450 °C abgekühlt. Bei dieser Temperatur wird das Band für 1 - 5 min gehalten, um danach mit mindestens 2 °C/s auf Raumtemperatur gebracht zu werden. Das so erhaltene Warmband soll ein aus Martensit, Bainit, Ferrit und Restaustenit bestehendes Gefüge besitzen.

Aus der US 2008/0251161 A1 ist ein hochfestes kaltgewalztes Stahlflachprodukt mit einer Härte von mindestens 270 HV bekannt, das neben Eisen und unvermeidbaren Verunreinigungen (in Masse-%) 0,1 - 0,25 % C, 1,0 - 2,0 % Si, 1,5 - 3,0 % Mn, >0 bis 0,01 P, >0 bis 0,005 % S und 0,01 - 3,0 % Al enthält. Das Gefüge des so zusammengesetzten Stahlflachprodukts besteht zu mehr als 70 % aus bainitischem Ferrit. Gleichzeitig sind im Gefüge 5 - 20 % Restaustenit enthalten.

Aus der EP 1 865 085 A1 ist ein hochfestes kaltgewalztes Stahlflachprodukt bekannt, bei dem eine optimierte Haftung einer metallischen Beschichtung, eine gute Verarbeitbarkeit und eine hohe Widerstandsfähigkeit gegen Wasserstoffversprödung gewährleistet sein soll. Das Stahlflachprodukt weist dazu neben Eisen und unvermeidbaren Verunreinigungen (in Masse-%) 0,06 - 0,6 % C, 1 - 6 % Mn, 0,1 - 2 % Si und 0,01 - 3 % Al auf, wobei für die Gehalte an Si und Mn die Bedingung Si/Mn $\leq$ 0,40 erfüllen sollen. Optional kann das Stahlflachprodukt 0,005 - 0,1 % Nb, bis zu 0,02 % S, 0,0005 - 0,1 % P, bis zu 0,01 % N, 0,005 - 0,1 % Ti, 0,0003 - 0,01 % B und 0,005 - 0,1 % V enthalten. Das Gefüge des Stahlflachprodukts soll dabei gemäß einer Variante mindestens 75 % bainitisches Ferrit und polygonales Ferrit und mindestens 3 % Restaustenit aufweisen, wobei der Anteil des polygonalen Ferrits 1 - 50 % und der Anteil des bainitischen Ferrits mindestens 40 % betragen soll. Alternativ kann das Gefüge auch mindestens 75 % angelassenes Martensit und Ferrit und mindestens 3 % Restaustenit enthalten, wobei in diesem Fall der Anteil des Ferrits 4 - 40 % und der Anteil des Martensits mindestens 50 % % betragen soll. Bei seiner Herstellung durchläuft das Stahlflachprodukt ein Warmwalzen mit einer anschließenden Oberflächen- und Wärmebehandlung, bei denen speziell abgestimmte Temperaturvorgaben beachtet werden müssen. Auf diese Weise soll nicht nur die angestrebte Oberflächenbeschaffenheit, sondern auch die Bildung von Rissen bei der Umformung vermieden werden.

Vor dem Hintergrund des voranstehend beschriebenen Standes der Technik bestand die Aufgabe der Erfindung darin, ein Verfahren zur Herstellung eines Kaltflachprodukts aus einem Mehrphasenstahl mit TRIP-Eigenschaften anzugeben, das eine weiter erhöhte Festigkeit bei gleichzeitig hoher Bruchdehnung besitzt. Ebenso sollten ein Mehrphasenstahl und ein Flachprodukt mit dieser Eigenschaftskombination geschaffen werden.

Im Hinblick auf das Verfahren ist die oben angegebene Aufgabe schließlich erfindungsgemäß dadurch gelöst worden, dass die in Anspruch 1 angegebenen Arbeitsschritte durchlaufen werden.

In Bezug auf den Stahl ist die voranstehend angegebene Aufgabe erfindungsgemäß durch einen gemäß Anspruch 8 beschaffenen Stahl gelöst worden.

In Bezug auf das Flachprodukt besteht die Lösung der oben genannten Aufgabe in einem gemäß Anspruch 13 ausgebildeten Kaltflachprodukt.

Vorteilhafte Ausgestaltungen der Erfindung sind in den abhängigen Ansprüchen angegeben und werden nachfolgend gemeinsam mit dem allgemeinen Erfindungsgedanken im Einzelnen erläutert.

Ein erfindungsgemäßer Mehrphasenstahl enthält (in Gew.-%) C: 0,14 - 0,25 %, Mn: 1,7 - 2,5 %, Si: 1,4 - 2,0 %, Al: < 0,1 %, Cr: < 0,1 %, Mo: < 0,05 %, Nb: 0,02 - 0,06 %, Ti: 0,01 - 0,1 %, S: bis zu 0,01 %, P: bis zu 0,02 %, N: bis zu 0,01 %, sowie optional mindestens ein Element aus der Gruppe "B, V" gemäß folgender Maßgabe: B: bis zu 0,002 %, V: bis zu 0,15 %, Rest Eisen und unvermeidbare Verunreinigungen.

Im Zuge des erfindungsgemäßen Verfahrens wird der erfindungsgemäße Stahl erschmolzen und zu einem Vorprodukt vergossen. Bei diesem Vorprodukt kann es sich um eine Bramme oder eine Dünnbramme handeln.

Das Vorprodukt wird dann erforderlichenfalls auf eine 1100 - 1300 °C betragende Temperatur wiedererwärmt, um ein gleichmäßig durchgewärmtes Gefüge des Ausgangsprodukts zu erhalten. Wiedererwärmungstemperaturen von max. 1250 °C, insbesondere max. 1220 °C führen dabei bei optimierten Produktionskosten zu einer verbesserten Oberfläche des erfindungsgemäß erzeugten Produkts.

Von der Wiedererwärmungstemperatur ausgehend wird das Vorprodukt anschließend zu einem Warmband warmgewalzt. Die Endtemperatur des Warmwalzens beträgt erfindungsgemäß 820 - 950 °C, um eine gute Gefügeausgangssituation für das Abkühlen auf dem im Anschluss an das Warmwalzen durchlaufenen Auslaufrollgang zu gewährleisten.

Das erhaltene Warmband wird daraufhin bei einer 400 - 750 °C, insbesondere 530 - 600 °C, betragenden Haspeltemperatur zu einem Coil gewickelt, um die später durchgeführte Kaltwalzung ohne große Walzkräfte ausführen zu können und eine Korngrenzenoxidation zu vermeiden.

Nach dem Haspeln wird das Warmband bei Kaltwalzgraden von 30 - 80 %, insbesondere 50 - 70 %, zu einem Kaltflachprodukt kaltgewalzt, um eine genügend hohe treibende Kraft für die Rekristallisationsvorgänge beim anschließenden Glühen zu gewährleisten. Dabei führen Kaltwalzgrade von 30 - 65 %, insbesondere 50 - 65 %, besonders sicher zu dem gewünschten Ergebnis.

Das erhaltene Kaltflachprodukt wird anschließend einer Wärmebehandlung unterzogen, die eine Durchlaufglühung und ein Überaltern des Kaltflachprodukts umfasst.

Die bei der Durchlaufglühung eingestellte Glühtemperatur ist erfindungsgemäß um mindestens 20 °C höher als die $A_{c1}$-Temperatur des Stahls und darf die $A_{c3}$-Temperatur des Stahls nicht überschreiten.

Die $A_{c3}$-Temperatur des erfindungsgemäßen Stahls lässt sich gemäß Leslie, s. W.C. Leslie "The Physical Metallurgy of Steel", Mc Graw-Hill Book Company, 1981, p. 275, nach folgender Formel [4] berechnen:

$$[4] \quad A_{c3} = 910 - 203(\%C)^{0,5} - 15,2(\%Ni) + 44,7(\%Si) +$$
$$104(\%V) + 31,5(\%Mo) + 13,1(\%W) - 30(\%Mn) -$$
$$11(\%Cr) - 20(\%Cu) + 700(\%P) + 400(\%Al) +$$
$$400(\%Ti)$$

mit %C = C-Gehalt, %Ni = Ni-Gehalt, %Si = Si-Gehalt, %V = V-Gehalt, %Mo = Mo-Gehalt, %W = W-Gehalt, %Mn = Mn-Gehalt, %Cr = Cr-Gehalt, %Cu = Cu-Gehalt, %P = P-Gehalt, %Al = Al-Gehalt und %Ti = Ti-Gehalt des Stahls.

Die bei der Überalterungsbehandlung eingestellte Überalterungstemperatur liegt typischerweise bei 350 - 500 °C, insbesondere 370 - 460 °C, um eine weitere Anreicherung des Austenits mit Kohlenstoff zu bewirken.

Die von der Erfindung vorgeschriebene Durchlaufglühung bei einer bis höchstens zur $A_{c3}$-Temperatur reichenden Glühtemperatur bewirkt, dass das Gefüge des erfindungsgemäß erzeugten Kaltflachprodukts vergleichbar hohe Martensitgehalte von 12 - 40 Vol.-% und damit einhergehend ein hohes Niveau der Zugfestigkeit $R_m$ von mindestens 980 MPa erreicht. Gleichzeitig weist der erfindungsgemäß erzeugte Stahl ein gutes Umformvermögen auf, das sich in einer Bruchdehnung $A_{80}$ in Querrichtung von mindestens 15 % äußert. Die Streckgrenze $R_{eL}$ des erfindungsgemäßen Stahls liegt regelmäßig über 500 MPa. Dabei besitzt der erfindungsgemäße Mehrphasenstahl TRIP-Eigenschaften.

Die Glühdauer, über die das Kaltflachprodukt bei der Glühtemperatur geglüht wird, beträgt typischerweise höchstens 300 s, damit sich ein ausreichend hoher Anteil an mit Kohlenstoff angereichertem Austenit im Zweiphasengebiet des Stahls bilden kann.

Die Dauer der nach dem Glühen durchgeführten Überalterungsbehandlung kann bis zu 800 s betragen, um den Restaustenit optimal zu stabilisieren.

Um eine Rückumwandlung in Ferrit zu erlangen und die Entstehung von Perlit zu unterdrücken, kann das Kaltflachprodukt nach dem Glühen ausgehend von der der maximal der $A_{c3}$-Temperatur entsprechenden Glühtemperatur mit einer Abkühlgeschwindigkeit von mindestens 5 °C/s beschleunigt auf eine 500 °C betragende Zwischentemperatur abgekühlt werden.

Das Glühen des Kaltflachprodukts kann im Zuge einer Feuerbeschichtung durchgeführt werden, bei der das Kaltflachprodukt mit einer metallischen Schutzbeschichtung versehen wird.

Ebenso ist es möglich, das erfindungsgemäß erzeugte Kaltband nach der Wärmebehandlung durch elektrolytisches Beschichten oder ein anderes Abscheideverfahren mit einer Schutzschicht zu versehen.

Ergänzend oder alternativ kann es ebenso zweckmäßig sein, das Kaltflachprodukt mit einer organischen Schutzschicht zu belegen.

Optional kann das erhaltene Kaltband auch noch einer Nachwalzung bei Verformungsgraden von bis zu 3,0 % unterzogen werden, um seine Maßhaltigkeit, Oberflächenbeschaffenheit und mechanische Eigenschaften zu verbessern.

Um die Kaltwalzbarkeit des Warmbands zu verbessern, kann das Warmband vor dem Kaltwalzen einer Glühung unterzogen werden. Diese kann vorteilhafterweise als Haubenglühung oder Durchlaufglühung durchgeführt werden. Die bei der das Kaltwalzen vorbereitenden Glühung eingestellten Glühtemperaturen betragen typischerweise 400 - 700 °C.

Kohlenstoff erhöht in einem erfindungsgemäßen Stahl die Menge und die Stabilität des Restaustenits. In erfindungsgemäßem Stahl ist daher mindestens 0,14 Gew.-% Kohlenstoff vorhanden, um den Austenit bis Raumtemperatur zu stabilisieren und eine vollständige Umwandlung des bei einer Glühbehandlung gebildeten Austenits in Martensit, Ferrit oder Bainit bzw. bainitischen Ferrit zu verhindern. Über 0,25 Gew.-% liegende Kohlenstoffgehalte wirken sich jedoch auf die Schweißeignung negativ aus. Besonders sicher lassen sich die positiven Wirkungen von Kohlenstoff in erfindungsgemäßem Stahl nutzen, wenn in ihm C in Gehalten von 0,19 - 0,24 Gew.-%, insbesondere bis zu 0,23 Gew.-%, vorhanden ist, wobei ein Mindestgehalt von 0,21 Gew.-% C besonders vorteilhaft ist.

Mn trägt wie C zur Festigkeit und zur Erhöhung der Menge und der Stabilität des Restaustenits bei. Zu hohe Mn-Gehalte verstärken jedoch die Gefahr der Seigerungsbildung. Sie wirken sich zudem negativ auf die Bruchdehnung aus, da die Ferrit- und Bainit-Umwandlungen stark verzögert werden und als Folge vergleichbar hohe Mengen an Martensit im Gefüge verbleiben. Der Mn-Gehalt eines erfindungsgemäßen Stahls ist auf 1,7 - 2,5 Gew.-% festgesetzt.

Erfindungsgemäßer Stahl enthält 1,4 - 2,0 Gew.-% Si. Bei Gehalten von mehr als 1,4 Gew.-% unterstützt Si die Stabilisierung des Restaustenits und unterdrückt bei der im Zuge der erfindungsgemäßen Verarbeitung des Stahls durchgeführten Überalterungsbehandlung die Karbidbildung in der Bainitstufe. Die Bainitumwandlung läuft in Folge der Anwesenheit von Si nicht vollständig ab, so dass nur bainitischer Ferrit gebildet wird und die Karbidbildung nicht zu Stande kommt. Auf diese Weise wird die erfindungsgemäß angestrebte Stabilität von an Kohlenstoff angereichertem Restaustenit erzielt. Darüber hinaus trägt Si zur Erhöhung der Festigkeit durch Mischkristallverfestigung bei. Bei Gehalten von mehr 2 Gew.-% muss jedoch mit einer Verschlechterung der Oberflächenqualität und der Gefahr einer Versprödung beim Warmwalzen gerechnet werden.

Bei der Erzeugung eines erfindungsgemäßen Stahls wird Al zur Desoxidation eingesetzt. Ein erfindungsgemäßer Stahl weist daher Al-Gehalte von weniger 0,1 Gew.-% auf.

Cr und Mo sind in einem erfindungsgemäßen Stahl unerwünscht und sollen daher nur in unwirksamen Mengen vorhanden sein, da sie die bainitische Umwandlung verzögern und die Stabilisierung des Restaustenits behindern. Daher ist erfindungsgemäß der Cr-Gehalt auf weniger als 0,1 Gew.-% und der Mo-Gehalt eines erfindungsgemäßen Stahls auf weniger als 0,05 Gew.-% beschränkt.

Ein erfindungsgemäßer Stahl enthält Nb in Gehalten von 0,02 - 0,06 Gew.-% sowie optional eines oder mehrere der Elemente "Ti, V, B", um die Festigkeit des erfindungsgemäßen Stahls zu steigern. Nb, Ti und V bilden mit dem im erfindungsgemäßen Stahl vorhandenen C und N sehr feine Ausscheidungen. Diese Ausscheidungen wirken festigkeits- und streckgrenzensteigernd durch Teilchenhärtung und Kornfeinung. Die Kornfeinung ist auch für die umformtechnischen Eigenschaften des Stahls von großem Vorteil.

Ti bindet N noch bei der Erstarrung oder sehr hohen Temperaturen ab, so dass mögliche negative Wirkungen dieses Elements auf die Eigenschaften des erfindungsgemäßen Stahls auf ein Minimum reduziert sind. Um diesen Effekt zu nutzen, ist in einem erfindungsgemäßen Stahl zusätzlich zum stets vorhandenen Nb 0,01 - 0,1 Gew.-% Ti und optional bis zu 0,15 Gew.-% V vorhanden.

Eine Überschreitung der erfindungsgemäß vorgegebenen Obergrenzen der Gehalte an Mikrolegierungselementen würde zur Verzögerung der Rekristallisation während des Glühens führen, so dass diese bei der realen Produktion entweder nicht realisiert werden kann oder eine zusätzliche Ofenleistung erfordern würde.

Der positive Einfluss der Anwesenheit von Ti in Bezug auf die Abbindung der N-Gehalte kann dann besonders zielgerichtet genutzt werden, wenn der Ti-Gehalt "%Ti" eines erfindungsgemäßen Mehrphasenstahls folgende Bedingung [3] erfüllt:

$$[3] \quad \%Ti \geq 3{,}4 \; x \; \%N,$$

wobei mit "%N" der jeweilige N-Gehalt des Mehrphasenstahls bezeichnet ist.

Durch die Zugabe von bis zu 0,002 Gew.-% Bor kann die Ferritbildung bei der Abkühlung verzögert werden, so dass eine größere Austenitmenge in der Bainitstufe vorliegt. Dadurch können die Menge und die Stabilität des Restaustenits erhöht werden. Darüber hinaus wird statt normalem Ferrit bainitischer Ferrit gebildet, der zur Erhöhung der Streckgrenze beiträgt.

Praxisgerechte, im Hinblick auf die Kosten und das Eigenschaftsprofil des erfindungsgemäßen Stahls besonders vorteilhafte Varianten des erfindungsgemäßen Stahls ergeben sich, wenn der Ti-Gehalt auf 0,02 Gew.-% beschränkt ist sowie B in Gehalten von 0,0005 - 0,002 Gew.-% oder V in Gehalten von 0,06 - 0,15 Gew.-% vorhanden sind.

Im Gefüge eines erfindungsgemäßen Stahls sind mindestens 10 Vol.-% Ferrit, insbesondere mindestens 12 Vol.-% Ferrit, sowie mindestens 6 Vol.-% Restaustenit und optional 5 - 40 Vol.-% Bainit vorhanden, um einerseits die angestrebte hohe Festigkeit und andererseits die gute Verformbarkeit zu sichern. Dabei können abhängig von der Menge der übrigen Gefügebestandteile bis zu 90 Vol.-% des Gefüges aus Ferrit bestehen, wobei die Restaustenit-Gehalte des Gefüges bis maximal 25 Vol.-% betragen können. Gehalte von mindestens 12 Vol.-% Martensit im Gefüge des erfindungsgemäßen Stahls tragen zu dessen Festigkeit bei, wobei der Martensitgehalt auf max. 40 Vol.-% beschränkt sein sollte, um eine ausreichende Dehnbarkeit des erfindungsgemäßen Stahls sicherzustellen.

Der Restaustenit eines erfindungsgemäßen Stahls ist so mit Kohlenstoff angereichert, dass sein gemäß der im Artikel von A. Zarei Hanzaki et al. in ISIJ Int. Vol. 35, No 3, 1995, pp. 324 - 331, veröffentlichten Formel [1] berechneter $C_{inRA}$-Gehalt mehr als 0,6 Gew.-% beträgt.

$$[1] \quad C_{inRA} = (a_{RA} - a_\gamma)/0{,}0044$$

mit

$a_\gamma$: 0,3578 nm (Gitterkonstante des Austenits);
$a_{RA}$: jeweiliger Gitterparameter des Restaustenits nach der Endabkühlung in nm am fertigen Kaltband gemessen.

Die Menge des im Restaustenit vorhandenen Kohlenstoffs beeinflusst wesentlich die TRIP-Eigenschaften und die Dehnbarkeit eines erfindungsgemäßen Stahls. Dementsprechend ist es vorteilhaft, wenn der $C_{inRA}$-Gehalt so hoch, wie möglich ist.

In Bezug auf die angestrebt hohe Stabilität des Restaustenits sieht die Erfindung daher vor, dass der erfindungsgemäße Stahl eine nach der Formel [2] berechnete Güte $G_{RA}$ des Restaustenits ("Restaustenitgüte") von mehr als 6 aufweist.

$$[2] \quad G_{RA} \; = \; \%RA \; \times \; C_{inRA}$$

mit

%RA: Restaustenit-Gehalt des Mehrphasenstahls in Vol.-%;
$C_{inRA}$: C-Gehalt des Restaustenits berechnet gemäß Formel [1].

Zum Nachweis der Eigenschaften erfindungsgemäß beschaffener und erzeugter Bleche sind die in Tabelle 1 angegebenen erfindungsgemäßen Schmelzen S1 bis S7 erschmolzen und zu Kaltflachprodukten K1 - K23 verarbeitet worden. Zusätzlich sind in Tabelle 1 die gemäß der oben angegebenen Formel [4] berechnete $A_{c3}$-Temperatur sowie die nach der folgenden Formel [5], ebenfalls nach dem oben bereits genannten Fachbuch von Leslie berechnete $A_{c1}$-Temperatur eingetragen:

$$[5] \quad Ac1 = 723 - 10,7(\%Mn) - 16,9(\%Ni) + 29,1(\%Si) +$$
$$16,9(\%Cr) + 290(\%As) + 6,38(\%W)$$

mit

%Mn = Mn-Gehalt, %Ni = Ni-Gehalt,
%Si = Si-Gehalt, %Cr = Cr-Gehalt,
%As = As-Gehalt, %W = W-Gehalt des Stahls

Im Zuge der Erzeugung der als Kaltbänder oder -bleche vorliegenden Kaltflachprodukte K1 - K23 ist jeweils eine der Stahlschmelzen S1 - S7 zu einer Bramme vergossen worden. Die Bramme ist anschließend wiedererwärmt zu einem Warmband warmgewalzt worden. Das erhaltene Warmband ist gehaspelt und nach dem Haspeln zu einem Kaltband kaltgewalzt worden.

Jedes der Kaltflachprodukte ist nach dem Kaltwalzen einer Wärmebehandlung unterzogen worden, die ein Glühen bei einer Glühtemperatur GT über eine Glühzeit GZ, eine darauf folgende beschleunigte Abkühlung mit einer Abkühlrate V auf 500 °C und eine Überalterungsbehandlung bei einer Überalterungstemperatur UAT über eine Überalterungszeit UAt umfasste. Die verschiedenen angewendeten Wärmebehandlungsvarianten sind in Tabelle 2 angegeben.

In Tabelle 3 sind für jedes der Kaltflachprodukte K1 - K23 die Stahlzusammensetzung sowie die bei seiner Erzeugung eingestellten Parameter "Wiedererwärmungstemperatur Wat", "Warmwalzendtemperatur Wet", "Haspeltemperatur Ht" und "Kaltwalzgrad KWg" verzeichnet. Zusätzlich ist in Tabelle 3 für jedes Kaltflachprodukt K1 - K23 angegeben, welches der in Tabelle 2 aufgelisteten Wärmebehandlungen bei seiner Erzeugung angewendet worden ist. Schließlich sind in Tabelle 3 auch noch für jedes der Kaltflachprodukte K1 - K23 die Zugfestigkeit $R_m$, die Streckgrenze $R_{eL}$, die Bruchdehnung $A_{80}$ in Querrichtung, der Restaustenitgehalt RA, der C-Gehalt $C_{inRA}$ des Restaustenits, die Güte $G_{RA}$ des Restaustenits sowie der Martensitgehalt M angegeben.

Die Versuche belegen, dass sich bei erfindungsgemäßer Vorgehensweise zuverlässig Kaltflachprodukte K1 - K20 erzeugen lassen, die jeweils eine optimale Kombination aus einer mehr als 980 MPa betragenden Zugfestigkeit $R_m$ und einer jeweils mehr als 15 % betragenden Bruchdehnung $A_{80}$ in Querrichtung besitzen. Die jeweils bei einer oberhalb der $A_{c3}$-Temperatur des jeweiligen Stahls liegenden Glühtemperaturen GT der geglühten Kaltflachprodukte K21, K22 und K23 erreichen dagegen dieses Festigkeitsniveau nicht.

Tabelle 1 (Gehaltsangaben in Gew.-%, Rest Eisen und unvermeidbare Verunreinigungen)

| Schmelze | C | Si | Mn | Al | Nb | V | Ti | P | S | N | B | $A_{c3}$ | $A_{c1}$ |
|---|---|---|---|---|---|---|---|---|---|---|---|---|---|
| S1 | 0,217 | 1,75 | 1,85 | 0,021 | 0,04 | 0,01 | 0,01 | 0,004 | 0,003 | 0,0016 | 0,0004 | 853 | 754 |
| S2 | 0,24 | 1,75 | 1,8 | 0,021 | 0,04 | 0,01 | 0,02 | 0,004 | 0,003 | 0,0036 | 0,001 | 853 | 755 |
| S3 | 0,217 | 1,75 | 2,2 | 0,021 | 0,04 | 0,01 | 0,01 | 0,004 | 0,003 | 0,0049 | 0,0004 | 842 | 750 |
| S4 | 0,23 | 1,65 | 2,0 | 0,05 | 0,04 | 0,02 | 0,01 | 0,015 | 0,003 | 0,005 | 0,0005 | 861 | 750 |
| S5 | 0,21 | 1,75 | 1,85 | 0,02 | 0,04 | 0,01 | 0,01 | 0,004 | 0,002 | 0,0016 | 0,0004 | 854 | 754 |
| S6 | 0,226 | 1,44 | 2,47 | 0,08 | 0,06 | 0,02 | 0,01 | 0,005 | 0,002 | 0,0025 | 0,0003 | 844 | 738 |
| S7 | 0,211 | 1,97 | 1,76 | 0,048 | 0,02 | 0,08 | 0,02 | 0,009 | 0,003 | 0,0037 | 0,0008 | 893 | 761 |

Tabelle 2

| Wärmebehandlung | GT [°C] | GZ [s] | V [°C/s] | UAT [°C] | UAt [s] | | Wärmebehandlung | GT [°C] | GZ [s] | V [°C/s] | UAT [°C] | UAt [s] |
|---|---|---|---|---|---|---|---|---|---|---|---|---|
| A | 820 | 60 | 15 | 375 | 60 | | K | 820 | 60 | 50 | 425 | 60 |
| B | 820 | 60 | 15 | 375 | 120 | | L | 820 | 60 | 50 | 425 | 120 |
| C | 820 | 60 | 15 | 375 | 360 | | M | 820 | 60 | 100 | 425 | 120 |
| D | 820 | 60 | 15 | 425 | 30 | | N | 840 | 60 | 100 | 425 | 120 |
| E | 820 | 60 | 15 | 425 | 60 | | O | 860 | 60 | 100 | 425 | 120 |
| F | 820 | 60 | 15 | 425 | 120 | | P | 800 | 100 | 15 | 375 | 120 |
| G | 820 | 60 | 15 | 450 | 30 | | Q | 820 | 80 | 15 | 375 | 60 |
| H | 820 | 60 | 15 | 450 | 60 | | R | 840 | 80 | 15 | 425 | 60 |
| I | 820 | 60 | 15 | 450 | 120 | | S | 860 | 80 | 50 | 425 | 120 |
| J | 820 | 60 | 50 | 425 | 30 | | | | | | | |

Tabelle 3

| Schmelze | Glüh. Nr. | WaT [°C] | WeT [°C] | HAT [°C] | KWg [%] | $R_{el}$ [Mpa] | $R_m$ [Mpa] | $A_{80}$ [%] | Ra [Vol-%] | $a_{Ra}$ [nm] | $C_{inRa}$ [Gew.-%] | Güte RA | Martensit [%] | Erfindungsgemäß? |
|---|---|---|---|---|---|---|---|---|---|---|---|---|---|---|
| K1 | S1 | K | 1101 | 890 | 600 | 45 | 542 | 986 | 21,8 | 19,0 | 0,3610 | 0,73 | 13,87 | 12 | ja |
| K2 | S1 | R | 1242 | 890 | 540 | 50 | 583 | 1042 | 21,2 | 19,8 | 0,3609 | 0,71 | 14,06 | 20 | ja |
| K3 | S1 | N | 1235 | 820 | 520 | 56 | 571 | 1027 | 20,3 | 16,9 | 0,3608 | 0,89 | 11,66 | 21 | ja |
| K4 | S2 | J | 1190 | 880 | 600 | 40 | 615 | 1086 | 16,9 | 15,0 | 0,3609 | 0,71 | 10,65 | 37 | ja |
| K5 | S2 | K | 1222 | 900 | 510 | 56 | 627 | 1049 | 20,9 | 17,5 | 0,3611 | 0,76 | 13,30 | 29 | ja |
| K6 | S2 | L | 1178 | 910 | 510 | 64 | 633 | 1025 | 21,4 | 18,5 | 0,3611 | 0,75 | 13,88 | 19 | ja |
| K7 | S3 | D | 1180 | 900 | 490 | 62 | 604 | 1098 | 16,5 | 15,5 | 0,3607 | 0,66 | 10,23 | 37 | ja |
| K8 | S3 | F | 1250 | 950 | 490 | 60 | 632 | 1015 | 19,1 | 17,5 | 0,3611 | 0,75 | 13,13 | 18 | ja |
| K9 | S3 | I | 1109 | 910 | 450 | 57 | 621 | 1058 | 18,7 | 16,5 | 0,3611 | 0,74 | 12,21 | 32 | ja |
| K10 | S4 | H | 1223 | 890 | 400 | 54 | 650 | 1100 | 16,7 | 15,0 | 0,3607 | 0,65 | 9,75 | 38 | ja |
| K11 | S4 | G | 1114 | 900 | 520 | 61 | 617 | 1023 | 20,1 | 16,3 | 0,3609 | 0,7 | 11,41 | 26 | ja |
| K12 | S5 | P | 1193 | 870 | 510 | 58 | 580 | 1012 | 21,1 | 18,3 | 0,3611 | 0,74 | 13,54 | 27 | ja |
| K13 | S5 | Q | 1200 | 830 | 700 | 45 | 582 | 992 | 18,6 | 17,2 | 0,3610 | 0,72 | 12,38 | 14 | ja |
| K14 | S5 | B | 1202 | 920 | 560 | 45 | 530 | 1008 | 22,1 | 19,1 | 0,3610 | 0,73 | 13,94 | 18 | ja |
| K15 | S6 | L | 1209 | 890 | 450 | 50 | 620 | 1089 | 17,1 | 15,5 | 0,3609 | 0,7 | 10,85 | 40 | ja |
| K16 | S6 | M | 1203 | 890 | 580 | 75 | 612 | 1070 | 17,8 | 14,0 | 0,3606 | 0,63 | 8,82 | 33 | ja |
| K17 | S6 | G | 1190 | 870 | 620 | 70 | 580 | 1063 | 19,4 | 17,7 | 0,3609 | 0,71 | 12,57 | 33 | ja |
| K18 | S7 | A | 1197 | 900 | 500 | 49 | 602 | 1099 | 20,9 | 17,0 | 0,3611 | 0,75 | 12,75 | 40 | ja |
| K19 | S7 | C | 1201 | 923 | 630 | 60 | 602 | 1085 | 19,2 | 16,0 | 0,3608 | 0,68 | 10,88 | 36 | ja |
| K20 | S6 | I | 1190 | 910 | 625 | 61 | 613 | 1038 | 19,8 | 17,1 | 0,3609 | 0,7 | 11,97 | 28 | ja |
| K21 | S5 | E | 1200 | 898 | 600 | 50 | 551 | 993 | 21,6 | 17,0 | 0,3611 | 0,75 | 12,75 | 13 | ja |
| K22 | S4 | O | 1191 | 860 | 612 | 56 | 662 | 944 | 17,3 | 13,6 | 0,3605 | 0,62 | 8,43 | 11 | nein |
| K23 | S7 | S | 1198 | 860 | 620 | 57 | 554 | 936 | 22,1 | 22,5 | 0,3610 | 0,73 | 16,43 | 9 | nein |

**Patentansprüche**

1. Verfahren zum Herstellen eines Kaltflachprodukts, bei dem folgende Arbeitsschritte absolviert werden:

   - Erschmelzen und Vergießen eines Mehrphasenstahls zu einem Vorprodukt, das neben Eisen und unvermeidbaren Verunreinigungen (in Gew.-%)

   | | |
   |---|---|
   | C: | 0,14 - 0,25 %, |
   | Mn: | 1,7 - 2,5 %, |
   | Si: | 1,4 - 2,0 %, |
   | Al: | < 0,1 %, |
   | Cr: | < 0,1 %, |
   | Mo: | < 0,05 %, |
   | Nb: | 0,02 - 0,06 %, |
   | Ti: | 0,01 - 0,1 %, |
   | S: | bis zu 0,01 %, |
   | P: | bis zu 0,02 %, |
   | N: | bis zu 0,01 %, |

   sowie optional mindestens ein Element aus der Gruppe "B, V" gemäß folgender Maßgabe:

   | | |
   |---|---|
   | B: | bis zu 0,002 %, |
   | V: | bis zu 0,15 % enthält; |

   - Warmwalzen des Vorprodukts ausgehend von einer 1100 - 1300 °C betragenden Anfangstemperatur und endend bei einer 820 - 950 °C betragenden Endtemperatur zu einem Warmband;
   - Haspeln des Warmbands bei einer 400 - 750 °C betragenden Haspeltemperatur;
   - optionales Glühen des Warmbands;
   - bei Kaltwalzgraden von 30 - 80 % erfolgendes Kaltwalzen des Warmbands zu dem Kaltflachprodukt;
   - Wärmebehandeln des erhaltenen Kaltflachprodukts, wobei das Wärmebehandeln
   - ein Durchlaufglühen des Kaltflachprodukts bei einer Glühtemperatur, die um mindestens 20 °C höher als die $A_{c1}$-Temperatur und höchstens gleich der $A_{c3}$-Temperatur des Mehrphasenstahls ist, sowie
   - ein Überaltern des Kaltflachprodukts bei einer 350 - 500 °C betragenden Überalterungstemperatur

   umfasst.

2. Verfahren nach Anspruch 1, **dadurch gekennzeichnet, dass** die Glühdauer, über die das Kaltflachprodukt bei der Glühtemperatur geglüht wird, höchstens 10 - 300 s beträgt.

3. Verfahren nach einem der voranstehenden Ansprüche, **dadurch gekennzeichnet, dass** die Dauer der nach dem Glühen durchgeführten Überalterungsbehandlung bis zu 800 s beträgt.

4. Verfahren nach einem der voranstehenden Ansprüche, **dadurch gekennzeichnet, dass** die Wärmebehandlung eine von der Glühtemperatur ausgehende Abkühlung des Kaltflachprodukts bis zu einer Zwischentemperatur von 500 °C mit einer Abkühlrate von mindestens 5 °C/s umfasst.

5. Verfahren nach einem der voranstehenden Ansprüche, **dadurch gekennzeichnet, dass** die Haspeltemperatur 530 - 600 °C, der Kaltwalzgrad 50 - 70 %, die Glühtemperatur 800 - 830 °C oder die Überalterungstemperatur 370 - 460 °C betragen.

6. Verfahren nach einem der voranstehenden Ansprüche, **dadurch gekennzeichnet, dass** das Kaltflachprodukt mit einer metallischen oder organischen Schutzschicht belegt wird.

7. Verfahren nach einem der voranstehenden Ansprüche, **dadurch gekennzeichnet, dass** das optional nach dem Haspeln und vor dem Kaltwalzen durchgeführte Glühen des Warmbands als Haubenglühung oder Durchlaufglühung bei 400 - 700 °C ausgeführt wird.

8. Mehrphasenstahl enthaltend (in Gew.-%)

| | |
|---|---|
| C: | 0,14 - 0,25 %, |
| Mn: | 1,7 - 2,5 %, |
| Si: | 1,4 - 2,0 %, |
| Al: | < 0,1 %, |
| Cr: | < 0,1 %, |
| Mo: | < 0,05 %, |
| Nb: | 0, 02 - 0, 06 %, |
| Ti: | 0,01 - 0,1 %, |
| S: | bis zu 0,01 %, |
| P: | bis zu 0,02%, |
| N: | bis zu 0,01 %, |

sowie optional mindestens ein Element aus der Gruppe "B, V" gemäß folgender Maßgabe:

| | |
|---|---|
| B: | bis zu 0,002 %, |
| V: | bis zu 0,15 %, |

Rest Eisen und unvermeidbare Verunreinigungen,

- wobei im Gefüge des Stahls mindestens 12 - 40 Vol.-% Martensit und mindestens 6 Vol.-% Restaustenit sowie optional 5 - 40 Vol.-% Bainit vorhanden sind und der Stahl eine Zugfestigkeit $R_m$ von mindestens 980 MPa und eine in Querrichtung gemessene Bruchdehnung $A_{80}$ von mehr als 15 % besitzt,
- wobei der gemäß der Formel [1] berechnete $C_{inRA}$-Gehalt des Restaustenits mehr als 0,6 Gew.-% beträgt:

$$[1] \quad C_{inRA} = (a_{RA} - a_\gamma)/0,0044$$

mit

$a_\gamma$: 0,3578 nm (Gitterparameter des Austenits);
$a_{RA}$: jeweiliger Gitterparameter des Restaustenits nach der Endabkühlung in nm am fertigen Kaltband gemessen, und

- wobei der Mehrphasenstahl eine nach der Formel [2] berechnete Güte $G_{RA}$ des Restaustenits aufweist, für die gilt $G_{RA} > 6$:

$$[2] \quad G_{RA} = \%RA \times C_{inRA}$$

mit

$\%RA$: Restaustenit-Gehalt des Mehrphasenstahls in Vol.-%;
$C_{inRA}$: C-Gehalt des Restaustenits berechnet gemäß Formel [1].

9. Mehrphasenstahl nach Anspruch 8, **dadurch gekennzeichnet, dass** sein C-Gehalt 0,19 - 0,23 Gew.-% beträgt.

10. Mehrphasenstahl nach einem der Ansprüche 8 oder 9, **dadurch gekennzeichnet, dass** sein Ti-Gehalt %Ti die Bedingung [3] erfüllt:

$$[3] \quad \%Ti \geq 3,4 \times \%N$$

mit

%N: N-Gehalt des Mehrphasenstahls;

11. Mehrphasenstahl nach einem der Ansprüche 8 bis 10, **dadurch gekennzeichnet, dass** er mindestens 0,0005 Gew.-% B enthält.

12. Mehrphasenstahl nach einem der Ansprüche 8 bis 11, **dadurch gekennzeichnet, dass** er mindestens 0,06 Gew.-% V enthält.

13. Kaltflachprodukt hergestellt durch Anwendung des gemäß einem der Ansprüche 1 bis 7 angegebenen Verfahrens und aus einem gemäß einem der Ansprüche 8 bis 12 beschaffenen Mehrphasenstahls.

## Claims

1. Method for producing a cold flat product, in which the following production steps are performed:

    - melting and casting a multi-phase steel into a semi-finished product which contains, in addition to iron and unavoidable impurities, (in % wt.)

    | | |
    |---|---|
    | C: | 0.14 - 0.25 %, |
    | Mn: | 1.7 - 2.5 %, |
    | Si: | 1.4 - 2.0 %, |
    | Al: | < 0.1 %, |
    | Cr: | < 0.1 %, |
    | Mo: | < 0.05 %, |
    | Nb: | 0.02 - 0.06 %, |
    | Ti: | 0.01 - 0.1 % |
    | S: | up to 0.01 %, |
    | P: | up to 0.02 %, |
    | N: | up to 0.01 % |

    and optionally at least one element from the group "B, V" according to the following stipulation:

    | | |
    |---|---|
    | B: | up to 0.002 %, |
    | V: | up to 0.15 %; |

    - hot rolling the semi-finished product into a hot strip starting from an initial temperature of 1100 - 1300 °C and ending at a final temperature of 820 - 950 °C;
    - coiling the hot strip at a coiling temperature of 400 - 750 °C;
    - optionally annealing the hot strip;
    - cold rolling the hot strip into the cold flat product at cold rolling degrees of 30 - 80 %;
    - heat treating the cold flat product obtained, wherein the heat treatment comprises

        - continuously annealing the cold flat product at an annealing temperature which is at least 20 °C higher than the $A_{c1}$ temperature and is at most the same as the $A_{c3}$ temperature of the multi-phase steel and
        - overageing the cold flat product at an overageing temperature of 350 - 500 °C.

2. Method according to Claim 1, **characterised in that** the annealing time over which the cold flat product is annealed at the annealing temperature is at most 10 - 300 s.

3. Method according to any one of the preceding claims, **characterised in that** the duration of the overageing treatment carried out after annealing is up to 800 s.

4. Method according to any one of the preceding claims, **characterised in that** the heat treatment comprises cooling the cold flat product starting from the annealing temperature to an intermediate temperature of 500 °C at a cooling rate of at least 5 °C/s.

5. Method according to any one of the preceding claims, **characterised in that** the coiling temperature is 530 - 600 °C, the cold-rolling degree is 50 - 70 %, the annealing temperature is 800 - 830 °C or the overageing temperature is 370 - 460 °C.

6. Method according to any one of the preceding claims, **characterised in that** the cold flat product is coated with a metallic or organic protective coating.

7. Method according to any one of the preceding claims, **characterised in that** the annealing of the hot strip optionally performed after the coiling and before the cold rolling is carried out as batch annealing or as continuous annealing at 400 - 700 °C.

8. Multi-phase steel containing (in % wt.)

| | |
|---|---|
| C: | 0.14 - 0.25 %, |
| Mn: | 1.7 - 2.5 %, |
| Si: | 1.4 - 2.0 %, |
| Al: | < 0.1 %, |
| Cr: | < 0.1 %, |
| Mo: | < 0.05 %, |
| Nb: | 0.02 - 0.06 %, |
| Ti: | 0.01 - 0.1 %, |
| S: | up to 0.01 %, |
| P: | up to 0.02 %, |
| N: | up to 0.01 %, |

and optionally at least one element from the group "B, V" according to the following stipulation:

| | |
|---|---|
| B: | up to 0.002 %, |
| V: | up to 0.15 %, |

with the remainder iron and unavoidable impurities,

- wherein in the microstructure of the steel at least 12 - 40 % vol. martensite, at least 6 % vol. residual austenite and optionally 5 - 40 % vol. bainite are present and the steel has a tensile strength $R_m$ of at least 980 MPa and an elongation at break $A_{80}$ measured in the transverse direction of more than 15 %.
- wherein the $C_{inRA}$ content of the residual austenite calculated according to formula [1] is more than 0.6 % wt.:

$$[1] \quad C_{inRA} = (a_{RA} - a_\gamma)/0.0044$$

with

$a_\gamma$: 0.3578 nm (the lattice parameter of the austenite);
$a_{RA}$: the respective lattice parameter of the residual austenite measured in nm on the finished cold strip after final cooling, and

- wherein the multi-phase steel has a grade $G_{RA}$ of the residual austenite calculated according to formula [2], for which $G_{RA} > 6$ applies:

$$[2] \quad G_{RA} = \%RA \times C_{inRA}$$

with

%RA: the residual austenite content of the multi-phase steel in % vol.;

$C_{inRA}$: the C content of the residual austenite calculated according to formula [1].

9. Multi-phase steel according to Claim 8, **characterised in that** its C content is 0.19 - 0.23 % wt.

10. Multi-phase steel according to any one of Claims 8 or 9, **characterised in that** its Ti content %Ti fulfils the condition [3]:

$$[3] \quad \%Ti \geq 3.4 \times \%N$$

with %N: the N content of the multi-phase steel.

11. Multi-phase steel according to any one of Claims 8 to 10, **characterised in that** it contains at least 0.0005 % wt. B.

12. Multi-phase steel according to any one of Claims 8 to 11, **characterised in that** it contains at least 0.06 % wt. V.

13. Cold flat product produced by applying the method according to any one of Claims 1 to 7 and consisting of a multi-phase steel constituted according to any one of Claims 8 to 12.

**Revendications**

1. Procédé de fabrication d'un produit plat, laminé à froid, dans lequel les étapes suivantes sont à effectuer :

- Fonte et coulée d'un acier à plusieurs phases pour l'obtention d'un produit primaire, qui, outre du fer et des impuretés inévitables, contient (en % en poids) :

| | |
|---|---|
| C : | 0,14 à 0,25 %, |
| Mn : | 1,7 à 2,5 %, |
| Si : | 1,4 à 2,0 %, |
| Al : | < 0,1 %, |
| Cr : | < 0,1 %, |
| Mo : | < 0,05 %, |
| Nb : | 0,02 à 0,06 %, |
| Ti : | 0,01 à 0,1 %, |
| S : | jusqu'à 0,01 %, |
| P : | jusqu'à 0,02 %, |
| N : | jusqu'à 0,01 %, |

et, en option, au moins un élément, choisi à partir du groupe « B, V », selon les prescriptions suivantes :

| | |
|---|---|
| B : | jusqu'à 0,002 %, |
| V : | jusqu'à 0,15 % ; |

- Laminage à chaud du produit primaire d'une température initiale de 1100 à 1300 °C jusqu'à une température finale de 820 à 950 °C, pour l'obtention d'un feuillard à chaud ;
- Bobinage du feuillard à chaud à une température de bobinage de 400 à 750 °C ;
- Recuit optionnel du feuillard à chaud ;
- laminage à froid du feuillard à chaud, effectué à un taux de laminage à froid de 30 à 80 %, pour l'obtention du produit plat, laminé à froid ;
- Traitement à chaud du produit plat, laminé à froid, obtenu, sachant que le traitement à chaud comprend :

- un recuit en continu du produit plat, laminé à froid à une température de recuit, qui est plus élevée d'au moins 20 °C que la température $A_{c1}$ et au maximum égale à la température $A_{c3}$ de l'acier à plusieurs phases, et
- un survieillissement du produit plat, laminé à froid à une température de survieillissement de 350 à 500 °C.

**2.** Procédé selon la revendication 1, **caractérisé en ce que** la durée de recuit, pendant laquelle le produit plat, laminé à froid est recuit, est de 10 à 300 s au maximum.

**3.** Procédé selon l'une des revendications précédentes, **caractérisé en ce que** la durée du traitement de survieillissement, exécuté après le recuit, va jusqu'à 800 s.

**4.** Procédé selon l'une des revendications précédentes, **caractérisé en ce que** le traitement à chaud comprend un refroidissement du produit plat, laminé à froid de la température de recuit jusqu'à une température intermédiaire de 500 °C, avec un taux de refroidissement d'au moins 5 °C / s.

**5.** Procédé selon l'une des revendications précédentes, **caractérisé en ce que** la température de bobinage est de 530 à 600 °C, le taux de laminage à froid est de 50 à 70 %, la température de recuit est de 800 à 830 °C ou la température de survieillissement de 370 à 460 °C.

**6.** Procédé selon l'une des revendications précédentes, **caractérisé en ce que** le produit plat, laminé à froid est pourvu d'une couche de protection métallique ou organique.

**7.** Procédé selon l'une des revendications précédentes, **caractérisé en ce que** le recuit du feuillard à chaud, effectué en option après le bobinage et avant le laminage à froid, est exécuté, en tant que recuit à cloche ou recuit en continu, à une température de 400 à 700 °C.

**8.** Acier à plusieurs phases, qui contient (en % en poids) :

| | |
|---|---|
| C : | 0,14 à 0,25 %, |
| Mn : | 1,7 à 2,5 %, |
| Si : | 1,4 à 2,0 %, |
| Al : | < 0,1 %, |
| Cr : | < 0,1 %, |
| Mo : | < 0,05 %, |
| Nb : | 0,02 à 0,06 %, |
| Ti : | 0,01 à 0,1 %, |
| S : | jusqu'à 0,01 %, |
| P : | jusqu'à 0,02 %, |
| N : | jusqu'à 0,01 %, |

et, en option, au moins un élément, choisi à partir du groupe « B, V », selon les prescriptions suivantes :

| | |
|---|---|
| B : | jusqu' à 0,002 %, |
| V : | jusqu'à 0,15 %, |

le reste étant du fer et des impuretés inévitables,

- sachant que la structure de l'acier contient au moins 12 à 40 % en volume de martensite et au moins 6 % en volume d'austénite résiduelle, ainsi que, en option, 5 à 40 % en volume de bainite, et que l'acier est doté d'une résistance à la traction $R_m$ d'au moins 980 MPa et d'un allongement à la rupture $A_{80}$, mesuré dans la direction transversale, de plus de 15 % ;
- sachant que la teneur $C_{inRA}$ de l'austénite résiduelle, calculée selon la formule [1], est de plus de 0,6 % en poids :

$$[1] \quad C_{inRA} = (a_{RA} - a_\gamma) \, 0,0044$$

avec

$a_\gamma$ : 0,3578 nm (paramètre de réseau de l'austénite) ;
$a_{RA}$ : paramètre de réseau respectif de l'austénite résiduelle après le refroidissement final, mesuré en nm sur le feuillard laminé à froid, fini ; et

- sachant que l'acier à plusieurs phases présente une qualité $G_{RA}$ d'austénite résiduelle, calculée selon la formule [2], qui est de $G_{RA} > 6$ :

$$[2] \quad G_{RA} = \quad \%RA \quad x \quad C_{inRA}$$

avec

%RA : Teneur en austénite résiduelle de l'acier à plusieurs phases en % en volume ;
$C_{inRA}$ : teneur en C de l'austénite résiduelle calculée selon la formule [1].

9. Acier à plusieurs phases selon la revendication 8, **caractérisé en ce que** sa teneur en C est de 0,19 à 0,23 en % en poids.

10. Acier à plusieurs phases selon l'une des revendications 8 ou 9, **caractérisé en ce que** sa teneur en Ti %Ti rempli les conditions [3] :

$$[3] \quad \%Ti \geq 3,4 \quad x \quad \%N$$

avec %N : Teneur en N de l'acier à plusieurs phases ;

11. Acier à plusieurs phases selon l'une des revendications 8 à 10, **caractérisé en ce qu'**il contient au moins 0,0005 % en poids de B.

12. Acier à plusieurs phases selon l'une des revendications 8 à 11, **caractérisé en ce qu'**il contient au moins 0,06 % en poids de V.

13. Produit plat, laminé à froid fabriqué à partir d'un acier à plusieurs phases, qui est constitué selon l'une des revendications 8 à 12, par application d'un procédé selon l'une des revendications 1 à 7.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1367143 A1
- EP 1589126 B1
- US 20100108200 A1
- JP 01272720 A
- US 20080251161 A1
- EP 1865085 A1

**In der Beschreibung aufgeführte Nicht-Patentliteratur**

- **W.C. LESLIE.** The Physical Metallurgy of Steel. Mc Graw-Hill Book Company, 1981, 275
- **A. ZAREI HANZAKI et al.** *ISIJ Int.,* 1995, vol. 35 (3), 324-331